**Europäisches Patentamt**

**European Patent Office**

**Office européen des brevets**

(19)

(11) Veröffentlichungsnummer : **0 373 389 B1**

(12)

# EUROPÄISCHE PATENTSCHRIFT

(45) Veröffentlichungstag der Patentschrift :
**18.03.92 Patentblatt 92/12**

(51) Int. Cl.$^5$ : **B60G 11/113,** B60G 5/053,
B60G 11/40

(21) Anmeldenummer : **89121489.2**

(22) Anmeldetag : **21.11.89**

(54) **Verbindung von Achse und Feder bei Nutzfahrzeugen.**

(30) Priorität : **13.12.88 DE 3841846**

(43) Veröffentlichungstag der Anmeldung :
**20.06.90 Patentblatt 90/25**

(45) Bekanntmachung des Hinweises auf die
Patenterteilung :
**18.03.92 Patentblatt 92/12**

(84) Benannte Vertragsstaaten :
**AT DE FR GB IT NL SE**

(56) Entgegenhaltungen :
**EP-A- 0 161 155
GB-A- 2 128 714
US-A- 2 643 111
US-A- 2 692 135**

(73) Patentinhaber : **MAN Nutzfahrzeuge
Aktiengesellschaft
Dachauer Strasse 667 Postfach 50 06 20
W-8000 München 50 (DE)**

(72) Erfinder : **Übelacker, Andreas, Dipl.-Ing.
Am Kindergarten 3
W-8061 Röhrmoos (DE)**
Erfinder : **Stummer, Josef, Dipl.-Ing.
Glockenbecherstrasse 16a
W-8000 München 45 (DE)**

EP 0 373 389 B1

## Beschreibung

Die Erfindung bezieht sich auf eine Einspannung zur rein kraftschlüssigen Verbindung einer Blattfeder, z.B. Feder aus Faserverbundwerkstoff, mit einer Achse oder rahmenseitigen Teilen eines Fahrzeuges, mit einem geteilten Gehäuse, in dem die Blattfeder über ein Gummi-Metallelement mit mindestens einer Metallschicht definiert vorgespannt gehalten ist.

Es sind Verbindungen von Achse und Feder mittels Federbügel (Brieden) und Spannplatten bekannt, wobei die relative Lage von Achse und Feder durch einen Zentrierbolzen formschlüssig sichergestellt ist, die Betriebskräfte jedoch überwiegend durch hohe Vorspannung der Federbügel reibschlüssig übertragen werden. Diese Art der Verbindung erweist sich bei Verwendung einer Kunststoffeder als problematisch, da die Schwächung bzw. das Schneiden der kraftaufnehmenden Fasern im Bereich des Zentrierbolzenloches eine ausreichende Festigkeit nicht mehr gewährleisten würde. Weiterhin werden die Werte für die zulässige Flächenpressung durch die hohen Vorspannkräfte der Federbügel überschritten, zumindest aber erweist sich das Einhalten definierter Vorspannkräfte in der Praxis als schwierig. Ein weiterer Nachteil der herkömmlichen Befestigung ist die Verhärtung der Feder im Einspannbereich im eingebauten Zustand. Bei anderen Lösungen wird die Verbindung zwischen Achse und Feder formschlüssig hergestellt, es erweisen sich jedoch auch hier die notwendigen Faserumlenkungen als schwer beherrschbar. Weitere Lösungen, bei denen der Formschluß nur durch angegossene oder anderseitig außerhalb der Fasern angebrachte Nuten oder ähnliche Formschlußelemente erzeugt wird, scheitern meistens an den hohen Schubspannungen und den doch beachtlichen Relativbewegungen im Einspannungsbereich zwischen der elastischen Feder und den starren achsfesten Fügeflächen.

Es ist eine gattungsgemäße Einrichtung nach der EP-A-16 11 55 bekannt, bei der zwischen einem geteilten Gehäuse und einer Blattfeder Elastomerkörper vorgesehen sind, zwischen denen die Blattfeder definiert vorgespannt gehalten ist, wobei die Verbindung zur Blattfeder über ein metallisches Trägerelement rein kraftschlüssig erfolgt, während die Anbindung an das Gehäuse über Feder/Nutverbindung weitgehend formschlüssig ist.

Der Erfindung liegt die Aufgabe zugrunde, eine sichere aber leicht lösbare, nicht festigkeitsbeeinträchtigende Verbindung zwischen Federn, insbesondere solchen aus Faserverbundwerkstoffen, und Achse bzw. Schwenklager bei Doppelachsagg regaten zu schaffen.

Dies wird erfindungsgemäß durch die Merkmale des Kennzeichnungsteils des Anspruchs 1 erreicht. Solcherart wird die Einspannung vorzugsweise einer Feder aus einem Faserverbundwerkstoff überwiegend durch Kraftschluß erzielt, wobei die Normalkräfte auf die Feder durch die definierte Kompression eines Gummis oder Elastomers erzeugt werden, der gleichzeitig in der Lage ist, die Relativbewegungen zwischen Feder und achsfester Einspannung aufzunehmen. Als weitere Vorteile - auch unter Hinzuziehung der in den Unteransprüchen herausgestellten Merkmale - ergeben sich eine bessere Ausnutzung der konstruktiven Federlänge durch Reduzierung der Versteifung der Feder im Einspannbereich, Vermeidung von unzulässigen Flächen- und Kantenpressungen im Einspannbereich der glasfaserverstärkten Kunststoffeder, Reduzierung der Federbelastung bzw. Erhöhung der Lebensdauer durch elastische Aufnahem aufgezwungener Auslenkungen, Komfortverbesserungen durch elastisch gedämpfte Übertragung von Stößen und Körperschall.

Entsprechend der Funktion der Feder (reine Tragfeder, reine Führungsfeder oder Trag- und Führungsfeder) können die erfindungsgemäßen Elemente entweder nur auf der Zug- und Druckseite der Feder oder auch allseitig angeordnet sein.

Zweckmäßigerweise sind gerade für höhere Belastungen, wie sie im Nutzfahrzeugbereich vorwiegend gegeben sind, die elastischen Bauelemente mehrschichtig aufgebaut, wobei die die Vorspannung erzeugende, nach dem Schließen des Gehäuses komprimierte Gummi- bzw. Elastomerschicht zwischen mindestens zwei Blechkörpern festhaftend verbunden, z.B. anvulkanisiert, ist. Auf der der Feder bzw. dem Gehäuse zugewandten Seite der Blechteile befindet sich zur Erzeugung möglichst großer Reibung eine ebenfalls fest haftende, z.B. anvulkanisierte dünne Gummi- oder Elastomerschicht, die aber zum eigentlichen Kompressionsvorgang für die Erzeugung der Vorspannkräfte keinen wesentlichen Anteil liefert.

Das die Feder umfassende Blechteil bzw. Zwischenteil aus anderem Werkstoff ist bezüglich Form und Material so beschaffen, daß es den Bewegungen der Feder im Gummi oder Elastomer ohne Schaden zu nehmen, folgen kann; dabei kann es auch mehrteilig ausgeführt sein. Durch entsprechende Formgebung und/oder Unterteilung der Gummischicht, bevorzugt in Umfangsrichtung, können gezielt besonders wünschenswerte oder notwendige Vorspannkraftverläufe erreicht werden.

Wenn zwischen dem äußeren Blechteil und dem Gehäuse eine entsprechend formschlüssige Verbindung vorgesehen ist, kann die außenliegende Gummi- oder Elastomerschicht entfallen.

Nach einer besonders vorteilhaften Ausführung der Erfindung ist eine Teilung des Gummi- bzw. Elastomerelementes parallel zur Federblattebene vorgesehen, wobei die Vorspannung der seitlich der Feder angeordneten Gummi- oder Elastomervolumina durch konisch ausgebildete Seitenwände der Blechteile erzielt wird, die sich beim Schließen des Gehäuses in vertikaler Richtung zusammen mit den auf und über der Feder liegenden Gummi- oder Elastomervolumina entsprechend mitverformen bzw. komprimieren. Solcherart werden die notwendigen Vorspannkräfte zur Aufnahme aller in der vertikalen, seitlich und längswirkenden Federkräfte aufgebracht. Als eine besonders günstige Querschnittform bietet sich eine trapezförmige Konturierung der an der Einspannstelle wirkenden Bauelemente an. Nach einer anderen Variante der Erfindung können die Kräfte über völlig getrennte Gummi- oder Elastomermetallelemente übertragen werden.

Weitere Merkmale und Vorteile der Erfindung sind den Ansprüchen, der Beschreibung und den Zeichnungen zu entnehmen.

Die Erfindung ist in mehreren Ausführungsbeispielen dargestellt.

Es zeigen:

Fig. 1 eine Einspannung einer Blattfeder zu einer Einzelachse,

Fig. 2 eine Einspannung einer Blattfeder für ein Doppelachsaggregat,

Fig. 3 ein Gehäuse mit eingespannter Blattfeder im Schnitt,

Fig. 4 eine Einzelheit eines Gummi- oder Elastomermetallelementes,

Fig. 5 ein Gehäuse mit eingespannter Blattfeder im Schnitt,

Fig. 6 eine Einzelheit eines Gummi- oder Elastomermetallelementes in der Perspektive,

Fig. 7 ein Gehäuse mit eingespannter Blattfeder im Schnitt,

Fig. 8 Schnitt B-B nach Fig. 2.

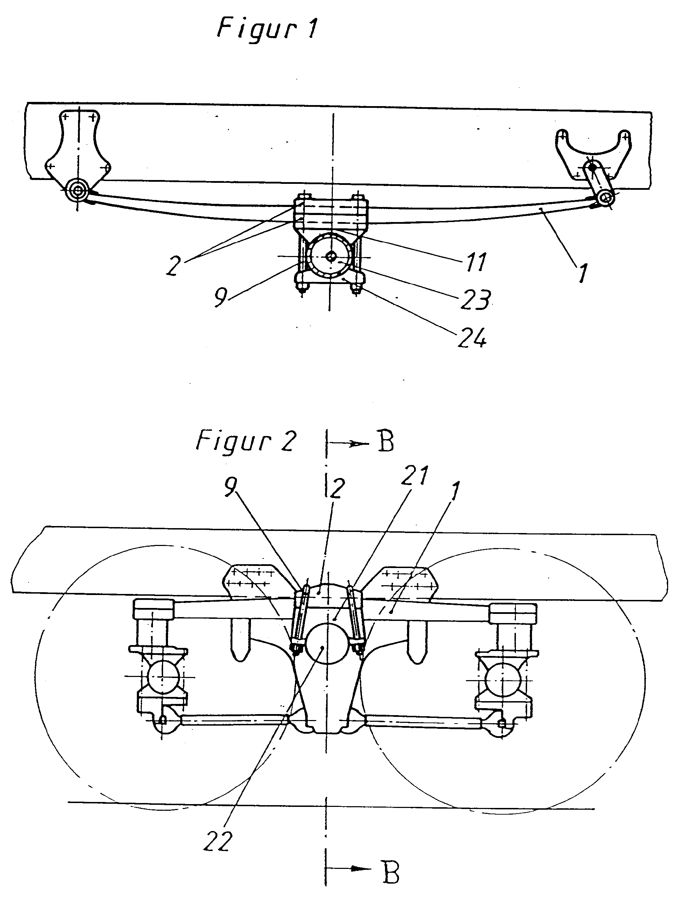

Fig. 1 zeigt eine am Rahmen eines Nutzfahrzeuges aufgehängte Blattfeder 1, vorzugsweise aus einem Faserverbundwerkstoff, wie z.B. glasfaserverstärktem Kunststoff. Die Feder 1 ist in der Mitte von einem mindestens zweiteiligen Gehäuse 2 gefaßt, dessen Hälften mittels Schrauben 9 verbunden sind, wobei über diese Schrauben auch noch die Verbindung zum die Achse 23 haltenden Achsgehäuse 24 hergestellt ist. Über den Herzbolzen 11 sind Gehäuse 2 und Achsgehäuse 24 formschlüssig verbunden.

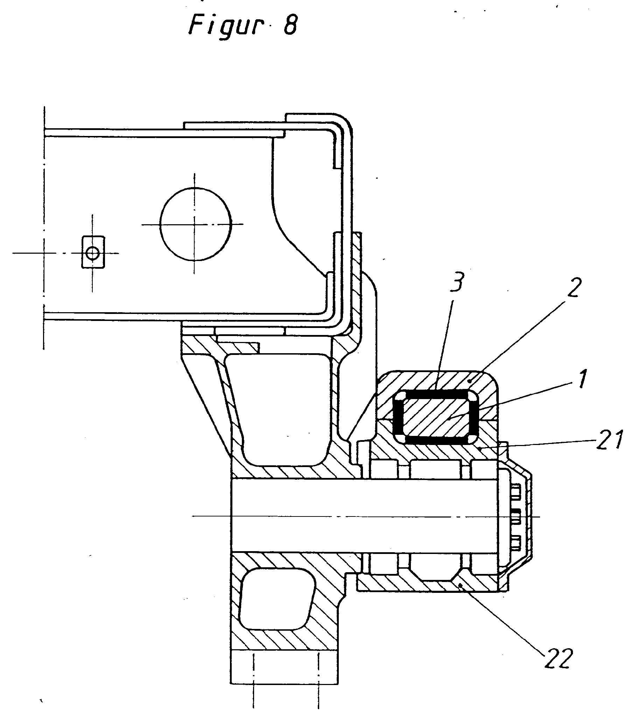

Fig. 2 zeigt eine Blattfeder 1 in Zuordnung zu einem Doppelachsaggregat. Die Feder 1 ist in der Mitte in einem zweigeteilten Gehäuse 2 eingespannt, dessen unterer Gehäuseteil 21 einstückig mit dem Schwenklager 22 - siehe auch Fig. 8 - verbunden ist, wobei die Verbindung der Gehäuseteile wiederum über Schrauben oder Spannbügel 9 erfolgt.

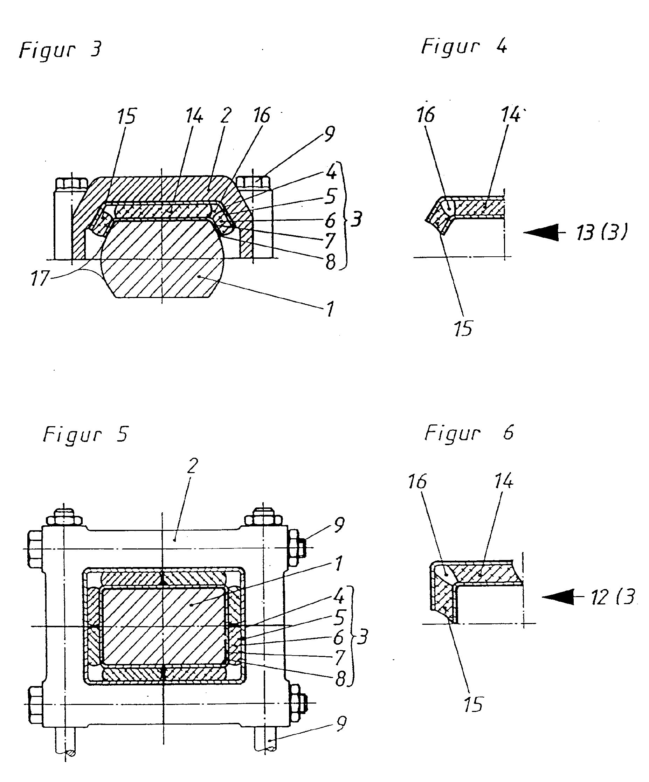

Aus Fig. 3 ist die Federeinspannung im Detail zu erkennen. Dabei umfaßt ein trapezförmig ausgestaltetes Gummi- oder Elastomermetallelement 3 eine ebenso konfigurierte Blattfeder 1. Das Gummi- oder Elastomerelement 3 ist außen von einem Geäuse 2 gehalten und ist spiegelbildlich noch einmal auf der anderen Seite - nicht dargestellt - der Doppeltrapezfeder angeordnet. Das Element 3 weist außen einen Gummi- oder Elastomerfilm 4 auf, der mit einem Trägerelement 5, vorzugsweise aus Blech, verbunden ist. Innerseitig der Trägerbleche 5, 7 ist ein komprimierbares Gummi- oder Elastomerteil 6 eingebunden, vorzugsweise anvulkanisiert. Außen weist das Trägerelement 7 wieder einen Gummi- oder Elastomierfilm auf, der zur reibschlüssigen Haftung an die Feder 1 dient. Der Gummiteil 6 ist in Segmente 14 und 15 unterteilt, die durch Zwischenräume 16 getrennt sind.

Aus Fig. 4 ist eine Einzelheit des Gummi- oder Elastomermetallelementes 3 zu ersehen, nämlich die trapezförmige Ausbildung 13 sowie die Unterbrechung des Gummi- oder Elastomerteils 6 durch Zwischenräume 16, in die die Gummi- oder Elastomervolumina bei Kompression hineinverdrängt werden.

Fig. 5 zeigt eine Variante von Fig. 3 und wird deshalb an dieser Stelle nur in ihrer Unterschiedlichkeit erläutert. Als Kompressionsteil wird hier ein U-förmig 12 gestaltetes Gummi- oder Elastomerteil 3 gewählt, wie es auch aus Fig. 6 hervorgeht. Das Gehäuse 2 ist in zwei Ebenen aufgeteilt und mittels horizontaler vertikaler Schrauben zusammengehalten.

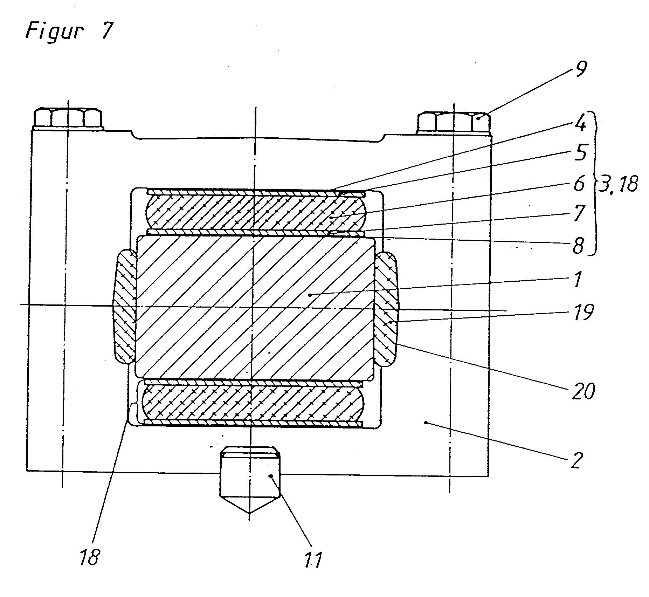

Aus Fig. 7 ist eine Variante zu ersehen, bei der die seitlichen Kompressionsteile keine Gummi-Metallelemente mit äußerer Haftschicht, sondern einfache Gummioder Elastomerteile 19 sind, die ihren Halt in Nuten 20 des Gehäuses 2 finden. Die oberen und unteren Kompressionsteile sind als ebene Gummi-Metallelemente 18 ausgebildet.

**Patentansprüche**

1. Einspannung zur rein kraftschlüssigen Verbindung einer Blattfeder (1), z.B. Feder aus Faserverbundwerkstoff, mit einer Achse oder rahmenseitigen Teilen eines Fahrzeuges, mit einem geteilten Gehäuse (2), in dem die Blattfeder (1) über Gummi-Metallelemente (3) mit mindestens einer Metallschicht (7) definiert vorgespannt gehalten ist, dadurch gekennzeichnet, daß die Gummi-Metallelemente (3) einen äußeren, an der Gehäuseinnenwand anliegenden Gummi- oder Elastomerfilm (4), ein Trägerelement (5), z.B. aus Blech, ein starkvolumiges Gummiteil (6), ein innerseitiges Trägerelement (7), z.B. aus Blech, und einen inneren Gummi- oder Elastomerfilm (8) aufweisen, wobei alle Teile z.B. über Vulkanisation miteinander verbunden sind.

2. Einspannung nach Anspruch 1, dadurch gekennzeichnet, daß die GummiMetallelemente (3) U-förmig (12) oder trapezförmig (13) konfiguriert sind.

3. Einspannung nach den Ansprüchen 1 oder 2, dadurch gekennzeichnet, daß die großvolumigen Gummi- oder Elastomer-Elemente (6) in ihrer Umfangserstreckung zur Feder (1) oder zum Federpaket in Segmente (14, 15) mit Zwischenräumen (16) unterteilt sind, wobei die Zwischenräume (16) in den Eckbereichen angeordnet sind.

4. Einspannung nach den Ansprüchen 1 bis 3, dadurch gekennzeichnet, daß die Feder (1) als Doppeltrapez (17) ausgestaltet ist und die Gummi-Metallelemente (3) entsprechend konfiguriert sind.

5. Einspannung nach einem oder mehreren der Ansprüche 1 bis 4, dadurch gekennzeichnet, daß auf der Ober- und Unterseite der Feder (1) je ein Gummioder Elastomer-Metallelement (18) angeordnet ist, und auf beiden Seiten der Feder (1) je ein Gummi- oder Elastomer-Element (19) mit formschlüssiger Verbindung zu einer in der Wand des Gehäuses (2) angebrachten Nut (20) vorgesehen ist.

6. Einspannung nach einem oder mehreren der Ansprüche 1 bis 5, dadurch gekennzeichnet, daß die untere Hälfte (21) des Gehäuses (2) integraler Bestandteil des Feder- bzw. Schwenklagers (22) eines Doppelaggregates ist.

7. Einspannung nach einem oder mehreren der Ansprüche 1 bis 6, dadurch gekennzeichnet, daß die erfindungsgemäße Einrichtung sowohl bei Einzelachsen wie auch bei Doppelachsaggregaten zur Anwendung kommt.

## Claims

1. A clamping arrangement for connecting in a purely friction-locking manner a leaf spring (1), e.g. a spring made of fibre composite material, to an axle or parts of a vehicle which are near the frame, having a divided housing (2) in which the leaf spring (1) is held under defined pre-tension viarubber-metal elements (3) with at least one metal layer (7), characterised in that the rubber-metal elements (3) have an outer rubber or elastomer film (4) resting against the housing inner wall, a support element (5), e.g. of sheet metal, a high-volume rubber part (6), a support element (7), e.g. of sheet metal, on the inner side, and an inner rubber or elastomer film (8), all the parts being joined together e.g. by vulcanisation.

2. A clamping arrangement according to Claim 1, characterised in that the rubber-metal elements (3) have a U-shaped (12) or trapezium-shaped (13) configuration.

3. A clamping arrangement according to Claims 1 or 2, characterised in that the large-volume rubber or elastomer elements (6) are sub-divided, in their periphery around the spring (1) or the spring packet, into segments (14, 15) with intermediate chambers (16), the intermediate chambers (16) being arranged in the corner regions.

4. A clamping arrangement according to Claims 1 to 3, characterised in that the spring (1) has the shape of a double trapezium (17) and the rubber-metal elements (3) have a corresponding configuration.

5. A clamping arrangement according to one or more of Claims 1 to 4, characterised in that two rubber-metal or elastomer-metal elements (18) are arranged, one on the top and the other on the underside of the spring (1), and a rubber or elastomer element (19) is provided on each side of the spring (1) with a positive-locking connection to a groove (20) arranged in the wall of the housing (2).

6. A clamping arrangement according to one or more of Claims 1 to 5, characterised in that the lower half (21) of the housing (2) is an integral component of the spring bearing or swivel bearing (22) of a double unit.

7. A clamping arrangement according to one or more of Claims 1 to 6, characterised in that the arrangement according to the invention can be used both with single axles and double axle units.

## Revendications

1. Moyen de fixation pour assurer une liaison uniquement par la force entre un ressort-lame (1) par exemple un ressort en un matériau composite à base de fibres, avec un essieu ou une partie de châssis d'un véhicule, comprenant un boîtier (2), divisé dans lequel le ressort-lame (1) est maintenu avec une précontrainte déterminée par l'intermédiaire d'éléments en métal-caoutchouc (3) avec au moins une couche de métal (7), moyen caractérisé en ce que les éléments en métal-caoutchouc (3) comportent un film en caoutchouc ou élastomère (4) extérieur, appliqué contre la paroi intérieure du boîtier, un élément de support (5) par exemple en tôle, une pièce en caoutchouc (6) de fort volume, un élément de support (7) intérieur, par exemple en tôle et un film en caoutchouc ou élastomère (8), intérieur, toutes les parties étant reliées entre elles par exemple par vulcanisation.

2. Moyen de fixation selon la revendication 1, caractérisé en ce que les éléments en métal-caoutchouc (1) ont une forme en U (12) ou une forme de trapèze (13).

3. Moyen de fixation selon l'une des revendications 1 ou 2, caractérisé en ce que les éléments en caoutchouc ou élastomère (6) de fort volume sont subdivisés dans leur extension périphérique par rapport au ressort (1) ou par rapport au paquet de ressorts, en des serpents (14, 15) avec des intervalles (16) et ces intervalles (16) sont prévus dans les zones de coin.

4. Moyen de fixation selon les revendications 1 à 3, caractérisé en ce que le ressort (1) est en forme de double trapèze (17) et les éléments en métal-caoutchouc (3) ont une forme correspondante.

5. Moyen de fixation selon l'une ou plusieurs des revendications 1 à 4, caractérisé en ce que le côté supérieur et le côté inférieur du ressort (1) comportent chaque fois un élément en métal-caoutchouc ou élastomère (18) et des deux côtés du ressort (1), il est prévu un élément en élastomère ou caoutchouc (19) avec une liaison par la forme à une rainure (20) prévue dans la paroi du boîtier (2).

6. Moyen de fixation selon l'une ou plusieurs des revendications 1 à 5, caractérisé en ce que la moitié inférieure (21) du boîtier (2) fait partie intégrante du ressort ou du palier de pivot (22) d'un ensemble double.

7. Moyen de fixation selon l'une ou plusieurs des revendications 1 à 6, caractérisé en ce que le dispositif selon l'invention s'applique à la fois aux essieux et aux ensembles à deux essieux.

# Figur 1

# Figur 2

EP 0 373 389 B1

Figur 3

15 14 2 16 9
4
5
6 } 3
7
8
17
1

Figur 4

16 14
13 (3)
15

Figur 5

2
9
1
4
5
6 } 3
7
8
9

Figur 6

16 14
12 (3
15

7

Figur 7

Figur 8